Europäisches Patentamt

European Patent Office

Office européen des brevets

(11) Veröffentlichungsnummer: **0 603 553 A1**

## (12) EUROPÄISCHE PATENTANMELDUNG

(21) Anmeldenummer: **93118709.0**

(22) Anmeldetag: **22.11.93**

(51) Int. Cl.⁵: **F16K 51/00,** F16K 37/00

(30) Priorität: **22.12.92 DE 4243446**

(43) Veröffentlichungstag der Anmeldung:
**29.06.94 Patentblatt 94/26**

(84) Benannte Vertragsstaaten:
**DE FR GB**

(71) Anmelder: **ROBERT BOSCH GMBH**
**Postfach 30 02 20**
**D-70442 Stuttgart(DE)**

(72) Erfinder: **Maisch, Wolfgang, Dr.-Ing.**
**Elbinger Weg 4**
**D-71701 Schwieberdingen(DE)**
Erfinder: **Mergenthaler, Robert, Ing.**
**Auf Hart 50**
**D-71706 Markgroeningen(DE)**

(54) Verfahren zum Einstellen eines Druckbegrenzungsventils.

(57) Die Erfindung betrifft ein Verfahren zum Einstellen eines vorgegebenen Öffnungsdruckes eines der Druckbegrenzung in einem insbesondere hydraulischen Hochdrucksystem dienenden Druckbegrenzungsventils.

Gemäß der Erfindung wird in zwei aufeinanderfolgenden Schritten der Hub einer Justiereinrichtung beim Verstellen des Öffnungsdruckes von einem ersten auf einen zweiten Prüfdruck ermittelt; auf der Basis der Druckdifferenz zwischen den beiden Prüfdrücken und des zugeordneten, ermittelten Hubes einerseits und auf der Basis der Druckdifferenz zwischen dem einen Prüfdruck und dem vorgegebenen Öffnungsdruck andererseits wird der erforderliche Hubwert der Justiereinrichtung für das Einstellen des vorgegebenen Öffnungsdruckes berechnet. Dann wird das Einstellen des vorgegebenen Öffnungsdruckes durch Verstellen der Justiereinrichtung mit dem berechneten, erforderlichen Hubwert durchgeführt.

## Stand der Technik

Die Erfindung geht aus von einem Verfahren zum Einstellen eines vorgegebenen Öffnungsdruckes eines Druckbegrenzungsventils unter Verwendung eines Prüfdruckes, der gleich dem gewünschten, vorgegebenen Öffnungsdruck ist und mit dem das einzustellende Druckbegrenzungsventil beaufschlagt wird, während mit Hilfe der dafür vorgesehenen Justiereinrichtung die auf einen Schließkörper des Ventils ausgeübte Kraft einer Feder so lange erhöht wird, bis das zunächst geöffnete Ventil gerade schließt.

Druckbegrenzungsventile, bei denen die Einstellung eines vorgegebenen Öffnungsdruckes in der vorstehend beschriebenen Weise erfolgt, sind in vielfältigen Ausführungen bekannt und beispielsweise in der EP 0 119 760 A1 und in der WO 86/04657 A1 beschrieben. Bei den in den genannten Druckschriften beschriebenen Druckbegrenzungsventilen ist der Schließkörper jeweils mittels einer Schraubenfeder gegen seinen Ventilsitz vorgespannt, deren anderes Ende sich an einer Stellschraube bzw. an einer Schraubkappe abstützt, wobei die Stellschraube und die Schraubkappe jeweils mittels einer Schraubverbindung mit dem Ventilgehäuse verbunden und in axialer Richtung gegenüber dem Ventilgehäuse verstellbar sind, um als Justiereinrichtung zum Einstellen der auf den Schließkörper ausgeübten Federkraft zu dienen.

Druckbegrenzungsventile der betrachteten Art werden insbesondere in Anti-Schlupfregelungen und anderen Hochdruckhydrauliksystemen benötigt und sorgen dafür, daß die hydraulischen Drücke in dem betreffenden System bestimmte Werte nicht übersteigen. Dadurch wird gewährleistet, daß die hydraulischen Einrichtungen nicht durch einen Überdruck überlastet werden und daß sich bei hydraulischen Regelvorgängen die gewünschte Regelcharakteristik ergibt.

Bei den hydraulischen Druckbegrenzungsventilen der betrachteten Art drückt eine Feder einen Schließkörper auf einen Ventilsitz. Wenn der hydraulische Druck in dem angeschlossenen Hydraulikkreis bei einem solchen Ventil so hoch wird, daß er über den vorhandenen Sitzquerschnitt eine Kraft ausübt, die die entgegenwirkende Federkraft übertrifft, dann öffnet das Ventil, so daß der Druck den eingestellten Wert, d.h. den vorgegebenen Öffnungsdruck, nicht überschreiten kann.

Es hat sich gezeigt, daß die Einstellung und Prüfung von Druckbegrenzungsventilen in der bisher üblichen, vorstehend beschriebenen Weise unter Verwendung eines hydraulischen Druckmediums insofern einen erheblichen, kostensteigernden Aufwand bedeutet, als das geprüfte bzw. eingestellte, hydraulische Druckbegrenzungsventil im Anschluß an die hydraulische Einstellung vor Lagerung und Versand erst wieder getrocknet werden muß. Außerdem hat es sich gezeigt, daß das Trocknen der Druckbegrenzungsventile durch Ausblasen mit einem Druckgas nicht nur aufwendig ist, sondern praktisch unvermeidlich auch zu Rückständen des hydraulischen Druckmittels in dem Ventil führt. Selbst geringe, nach dem Trocknen zurückbleibende Reste des Druckmediums verhindern aber eine zuverlässige Dichtheitsprüfung des Ventils unter Verwendung eines Druckgases. Außerdem verhindern selbst geringe, nach dem Trocknen zurückbleibende Rückstände ggf. ein vollständiges Evakuieren, so daß die Hydraulikflüssigkeit beim erstmaligen Befüllen eines ein solches Ventil enthaltenden Hydrauliksystems nicht zuverlässig in alle dafür vorgesehenen Kanäle desselben eindringen kann.

## Vorteile der Erfindung

Das erfindungsgemäße Verfahren mit den Merkmalen des Hauptanspruchs hat demgegenüber insbesondere den Vorteil, daß eine Benetzung von Ventiloberflächen mit Hydraulikflüssigkeit vermieden wird, daß ein Trocknen des Ventils entfallen kann und daß an dem Ventil keine störenden Rückstände vorhanden sind.

Durch die in den Unteransprüchen aufgeführten Maßnahmen sind vorteilhafte Weiterbildungen und Verbesserungen des im Hauptanspruch angegebenen Verfahrens möglich.

Gemäß dem vorgeschlagenen Verfahren zum Einstellen eines vorgegebenen Öffnungsdruckes bei einem Druckbegrenzungsventil ist es möglich, mit relativ niedrigen, pneumatischen Prüfdrücken zu arbeiten, um auf diese Weise die erforderlichen Daten für die spätere Einstellung des Druckbegrenzungsventils auf einen wesentlich höheren, vorgegebenen Öffnungsdruck zu erhalten, so daß auch die Sicherheitsvorschriften für das Arbeiten mit Druckgas- bzw. Druckluftsystemen problemlos eingehalten werden können.

Insbesondere besteht beim Arbeiten nach dem erfindungsgemäßen Verfahren die Möglichkeit, die Einstellung eines vorgegebenen Öffnungsdruckes unter Verwendung eines im praktischen Betrieb verfügbaren Luftdrucks von etwa 40 bar durchzuführen, wenn ein vorgegebener Öffnungsdruck eingestellt werden soll, der ein Mehrfaches dieses Druckes beträgt und beispielsweise bei 150 bar liegt.

Weiterhin ist es gemäß bevorzugten Varianten des erfindungsgemäßen Verfahrens möglich, entweder mit zwei definierten Prüfdrücken von beispielsweise etwa 5 bar und 40 bar zu arbeiten und den Hub der Justiereinrichtung dann für die vorgegebene Differenz zwischen den beiden Prüfdrücken zu ermitteln, wobei die Einstellung des Ventils in an sich bekannter Weise bei beiden Prüfdrücken jeweils so erfolgt, daß die Justiereinrichtung so eingestellt wird, daß das zuvor geöffnete Ventil gerade schließt, oder das Ventil nacheinander empirisch so einzustellen, daß sich ungefähr ein erster Öffnungsdruck oder ein zweiter Öffnungsdruck ergeben müßte, und nach jeder Einstellung den tatsächlich aufgetretenen Öffnungsdruck zu messen.

Zeichnung

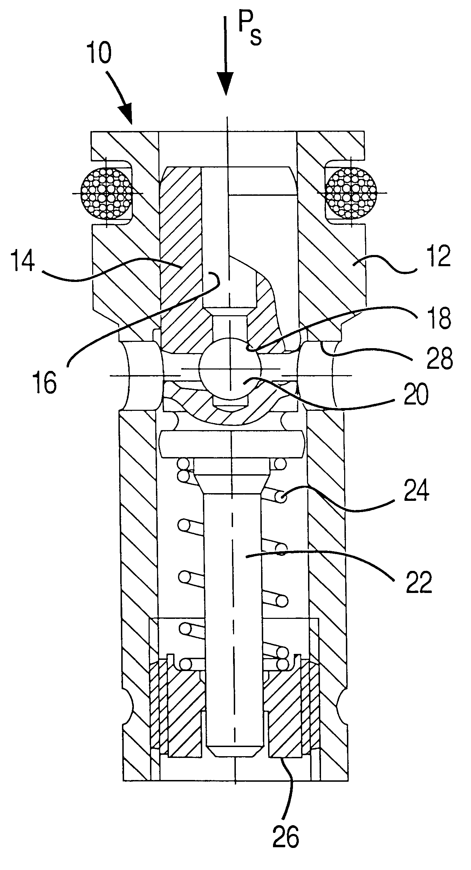

Die einzige Figur der Zeichnung zeigt ein Druckbegrenzungsventil, bei dem unter Anwendung des erfindungsgemäßen Verfahrens ein vorgegebener Öffnungsdruck eingestellt werden kann.

Im einzelnen zeigt die Zeichnungsfigur einen Längsschnitt durch ein Druckbegrenzungsventil 10 mit einem Gehäuse 12, an dessen einem, in der Zeichnung oberen Ende ein Einsatz 14 mit einem Kanal 16 vorgesehen ist. In dem Kanal 16 ist im Betrieb ein zu begrenzender, hydrau-lischer Druck $P_s$ eines Hydrauliksystems wirksam, wie dies durch einen Pfeil angedeutet ist. Am inneren Ende des Kanals 16 ist ein Ventilsitz 18 ausgebildet. An dem Ventilsitz 18 liegt bei geschlossenem Ventil ein kugelförmiger Schließkörper 20 dichtend an. Der Schließkörper 20 wird über ein stempelförmiges Andrückelement 22 mit der Kraft einer Schraubenfeder 24 beaufschlagt, die sich einerseits an dem Andrückelement und andererseits an einem Justierelement 26 abstützt, welches beim Ausführungsbeispiel als zylindrische Buchse mit einem Außengewinde ausgebildet ist, welches mit einem Innengewinde auf der Innenseite des Gehäuses 12 in axialer Richtung einstellbar verschraubt ist. Angrenzend an den Ventilsitz 18 und den Schließkörper 20 sind ferner in dem Ventilgehäuse 12 Austrittsöffnungen 28 vorgesehen, über die nach Erreichen des vorgegebenen Öffnungsdruckes Hydraulikflüssigkeit aus dem Kanal 16 zu einem Rücklauf (nicht gezeigt) abfließen kann.

Wenn bei dem betrachteten Druckbegrenzungsventil 10 unter Anwendung des erfindungsgemäßen Verfahrens ein vorgegebener Öffnungsdruck $P_3$ (Solldruck) eingestellt werden soll, dann wird wie folgt vorgegangen:
Der Kanal 16 wird mit einem vorgegebenen, definierten, ersten Prüfdruck $P_1$ beaufschlagt, und das Justierelement 26 wird dann zunächst so eingestellt, daß das Ventil 10 geöffnet ist. Anschließend wird das Justierelement 26 so weit in das Gehäuse 12 hineingeschraubt, daß das Ventil 10 gerade schließt. Nunmehr wird die Position des Justierelements 26 in dem Gehäuse ermittelt. Der erste Prüfdruck $P_1$ kann dabei beispielsweise einen Wert von 5 bar haben.

Anschließend wird der Kanal 16 mit einem zweiten, definierten, vorgegebenen Prüfdruck $P_2$ beaufschlagt, welcher höher ist als der erste Prüfdruck $P_1$ und beispielsweise 40 bar beträgt. Durch diesen zweiten Prüfdruck $P_2$ wird das Ventil 10 zunächst geöffnet. Nunmehr wird das Justierelement 26, ausgehend von der zuvor für den ersten Prüfdruck $P_1$ ermittelten Position, tiefer in das Gehäuse 12 hineingeschraubt, bis es gerade schließt. Nunmehr wird erneut die Position des Justierelements 26 relativ zu dem Gehäuse 12 ermittelt. Anschließend wird aus den beiden für den ersten und den zweiten Prüfdruck ermittelten Positionen der Stellweg bzw. der Hub $H_2$ des Justierelements 26 ermittelt. Nach der Durchführung der beiden Positionsmessungen und der Berechnung des Hubes $H_2$, der gegebenenfalls auch direkt gemessen werden kann, besteht nunmehr die Möglichkeit, den erforderlichen Hubwert $H_3$ zur Einstellung des gewünschten, vorgegebenen Öffnungsdruckes $P_3$ gemäß folgender Gleichung zu berechnen:

$$H_3 = H_2 \frac{P_3 - P_2}{P_2 - P_1}$$

Bei Anwendung des erfindungsgemäßen Verfahrens ist es, wie aus der vorstehenden Erläuterung deutlich wird, also möglich, mit relativ niedrigen, pneumatischen Drücken zu arbeiten, um die erforderlichen Informationen über den notwendigen Druck für die Einstellung eines vorgegebenen Öffnungsdruckes zu erhalten, der wesentlich höher sein kann, so daß einerseits ein mühsames und zeitraubendes Trocknen des Ventils entfällt, wie es beim direkten Einstellen des vorgegebenen Öffnungsdruckes beim Arbeiten mit einem hydraulischen Druckmittel erforderlich ist, und andererseits nur relativ geringe, pneumatische Drücke erzeugt werden müssen, die ohne weiteres beherrschbar sind. Da außerdem keinerlei Rückstände an dem Ventil zurückbleiben, kann eine Dichtheitsprüfung desselben problemlos durchgeführt werden. Weiterhin können sich beim Einsatz des Ventils bzw. beim erstmaligen Befüllen eines zugehörigen Hydrauliksystems keine Probleme ergeben, die auf Rückstände am Ventil zurückgeführt werden könnten.

Bei Betrachtung der vorstehend angegebenen Gleichung wird außerdem deutlich, daß die erforderlichen Messungen für das spätere Einstellen des Öffnungsdruckes auch in anderer Weise durchgeführt werden können als diese vorstehend beschrieben wurde, insbesondere in der Weise, daß das Justierelement zunächst so eingestellt wird, daß sich empirisch ein in einem gewissen, begrenzten Druckbereich liegender Öffnungsdruck ergeben sollte, wobei der pneumatische Druck dann beim tatsächlichen Schließen des zunächst geöffneten Ventils gemessen und als erster Prüfdruck im Sinne der obigen Gleichung verwendet wird. In entsprechender Weise wird dann bei einer zweiten empirisch vorgenommenen Einstellung des Justierelements ein dem zweiten Prüfdruck $P_2$ entsprechender Druck gemessen und außerdem der Hub $H_2$ ermittelt bzw. direkt gemessen, um unter Verwendung der angegebenen Formel den erforderlichen Hubwert $H_3$ für den vorgegebenen Öffnungsdruck zu bestimmen und das Ventil dann entsprechend einzustellen.

Dabei hat die zuletzt betrachtete Variante des erfindungsgemäßen Verfahrens den Vorteil, daß keine pneumatischen Druckquellen mit exakt vorgegebenen Prüfdrücken zur Verfügung stehen müssen.

Insgesamt wird aus der vorstehenden Beschreibung deutlich, daß beim Arbeiten nach dem erfindungsgemäßen Verfahren erhebliche Kosten- und Funktionsvorteile erreicht werden, während die für die Durchführung des Verfahrens erforderlichen pneumatischen Drücke und Meß- bzw. Einrichtungen problemlos zur Verfügung stehen. Außerdem erkennt man, daß das erfindungsgemäße Verfahren im Hinblick auf die einfachen Meß-, Rechen- und Einstellarbeiten ohne weiteres für eine Automatisierung geeignet ist, zumal es bei bekannter Steigung des Gewindes des Justierelements absolut unproblematisch ist, den berechneten, erforderlichen Hubwert in eine entsprechende winkelmäßige Verdrehung des Justierelements umzurechnen. Andererseits kann das Justierelement auch im Preßsitz in dem Ventilgehäuse angeordnet sein und ausgehend von einer Anfangsposition gezielt tiefer in das Ventilgehäuse gepreßt werden, um die Federvorspannung auf den gewünschten Wert zu justieren.

**Patentansprüche**

1. Verfahren zum Einstellen eines vorgegebenen Öffnungsdruckes eines der Druckbegrenzung in einem insbesondere hydraulischen Hochdrucksystem dienenden Druckbegrenzungsventils mit einem Schließkörper, der mittels einer Feder, deren Federkraft mittels einer axial in Richtung auf den Ventilsitz verstellbaren Justiereinrichtung einstellbar ist, gegen einen Ventilsitz vorgespannt ist, wobei die Einstellung der Federkraft in Abhängigkeit von einem Prüfdruck durchgeführt wird,
**dadurch gekennzeichnet, daß** in zwei aufeinanderfolgenden Schritten der Hub der Justiereinrichtung beim Verstellen des Öffnungsdruckes von einem ersten auf einen zweiten Prüfdruck ermittelt wird,
daß auf der Basis der Druckdifferenz zwischen den beiden Prüfdrücken und des zugeordneten, ermittelten Hubes einerseits und auf der Basis der Druckdifferenz zwischen dem einen Prüfdruck und dem vorgegebenen Öffnungsdruck andererseits der erforderliche Hubwert der Justiereinrichtung für das Einstellen des vorgegebenen Öffnungsdruckes berechnet wird und daß dann das Einstellen des vorgegebenen Öffnungsdruckes durch Verstellen der Justiereinrichtung mit dem berechneten, erforderlichen Hubwert durchgeführt wird.

2. Verfahren nach Anspruch 1, dadurch gekennzeichnet, daß das Berechnen des erforderlichen Hubwerts $H_3$ gemäß folgender Gleichung erfolgt:

$$H_3 = H_2 \frac{P_3 - P_2}{P_2 - P_1}$$

wobei $P_3$ = vorgegebener Öffnungsdruck; $P_1$ = erster Prüfdruck, $P_2$ = zweiter Prüfdruck und $H_2$ = ermittelter Hub beim Erhöhen des Öffnungsdruckes von dem ersten auf den zweiten Prüfdruck.

3. Verfahren nach Anspruch 1 oder 2, dadurch gekennzeichnet, daß für den ersten Prüfdruck ein niedrigerer Wert gewählt wird als für den zweiten Prüfdruck und daß der Wert für den zweiten Prüfdruck erheblich kleiner gewählt wird als der vorgegebene Öffnungsdruck.

4. Verfahren nach einem der Ansprüche 1 bis 3, dadurch gekennzeichnet, daß zum Erzeugen der Prüfdrücke ein Druckgas verwendet wird.

5. Verfahren nach Anspruch 4, dadurch gekennzeichnet, daß zum Erzeugen der Prüfdrücke Druckluft verwendet wird.

6. Verfahren nach einem der Ansprüche 1 bis 5, dadurch gekennzeichnet, daß als Justiereinrichtung ein mit einem Ventilgehäuse des Druckbegrenzungsventils einstellbar verbundenes Justierelement verwendet wird, welches die Position eines Widerlagers für eine den Schließ-körper beaufschlagende Schraubenfeder definiert.

7. Verfahren nach Anspruch 6, dadurch gekennzeichnet, daß das Justierelement einstellbar mit dem Ventilgehäuse verschraubt wird.

<table>
<tr><td>Europäisches<br>Patentamt</td><td>EUROPÄISCHER RECHERCHENBERICHT</td><td>Nummer der Anmeldung<br>EP 93 11 8709</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | DD-A-115 379 (KITZIG ET AL.)<br>* insgesamt *<br>--- | 1 | F16K51/00<br>F16K37/00 |
| A | FR-A-2 524 603 (FRAMATOME & CIE)<br>* Seite 3, Zeile 4 - Seite 4, Zeile 29; Figuren 1, 2 *<br>--- | 1 | |
| A | DE-A-34 26 018 (GAT GRUBENAUSBAU GMBH)<br>* Zusammenfassung; Seite 9, Zeile 5 - Seite 10, Zeile 34; Seite 12, Zeilen 3 - 31; Figuren 1, 2 *<br>----- | 1 | |

**RECHERCHIERTE SACHGEBIETE (Int.Cl.5)**

F16K

Der vorliegende Recherchenbericht wurde für alle Patentansprüche erstellt

| Recherchenort | Abschlußdatum der Recherche | Prüfer |
|---|---|---|
| BERLIN | 23. März 1994 | Beitner, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P04C03)